# EUROPEAN PATENT APPLICATION

(11) **EP 2 141 542 A1**
(43) Date of publication of application: **06.01.2010**
(21) Application number: 09007246.3
(22) Date of filing: 29.05.2009
(51) Int. Cl.: G03B 21/58, A47B 5/00, F16M 11/18, A47G 1/21

(54) **Slide mechanism for a projection screen**

(30) Priority: 01.07.2008 TW 97124787
(71) Applicant: Coretronic (Suzhou) Co.,Ltd., Suzhou Industrial Park (CN)
(72) Inventor: Yang, Xin-Chang, Suzhou Industrial Park (CN)
(74) Representative: Wagner, Bernhard Peter

(57) **Abstract**

A slide mechanism adapted to a projection screen apparatus includes a frame (1), a slider (2), a resilient device (4), and an engaging device (3). The frame includes a receiving portion (130) and a latch (123) disposed in the receiving portion. The slider is slidably disposed in the receiving portion and includes a body portion (20) defining a receiving groove (22) and a pull handle (21). The resilient device is disposed below the slider for exerting a resilient force on the slider to move the slider. The engaging device (3) is pivotally disposed in the receiving groove (22) of the slider (2) and includes an engaging end portion (31) and an exerting end portion (32). The engaging end portion is disposed in the receiving groove (22) and is connected against the latch (123). When a force is exerted on the exerting end portion, the engaging device is correspondingly rotated, and the engaging end portion of the engaging device is disengaged from the latch of the frame.

## Description

### BACKGROUND OF THE INVENTION

### 1. Field of the Invention

The present invention relates to a projection screen apparatus, and particularly to a slide mechanism adapted to a projection screen apparatus.

### 2. Description of Prior Art

In recent years, projection screen apparatuses have been widely used in various fields, such as business demonstration, multi-media meeting, education, and exhibition, to cooperate with a projector to provide various video presentations. Projection screen apparatuses may be generally classified into two types: electric projection screen apparatuses to deploy and retract the screen by electromotive power and manual projection screen apparatuses to scroll the screen by the resilient force of a restoring spring. Between the two types, the manual projection screen apparatus is more widely used for the simple structure, low cost and convenient and reliable use.

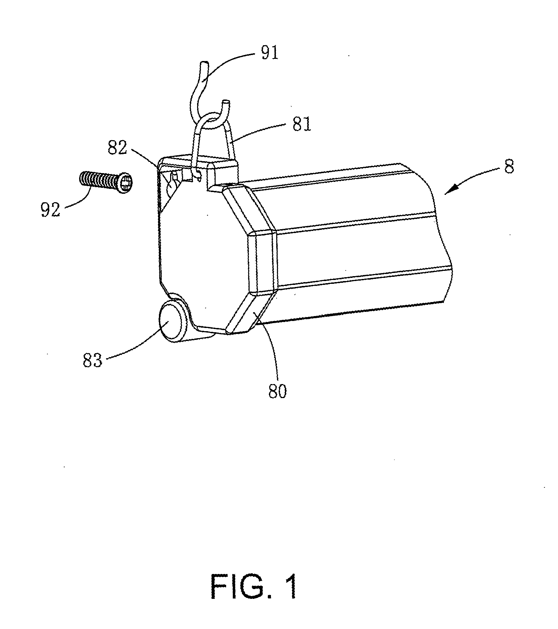

Projection screen apparatuses are generally suspended from the ceiling or wall disposed. As shown in FIG. 1, by engaging a hook 91 hanged on the ceiling of the user's room with a corresponding hanger 81 attached to the top of each end cover 80 of the projection screen casing 8, suspension mounting is achieved. Alternatively, by hooking a wall mount hole 82 defined at the rear of each end cover 80 of the projection screen casing 8 onto a corresponding screw 92 secured to the wall, wall mounting is achieved. However, the two conventional mounting methods both have disadvantages and bring inconveniencies to the user. In detail, for suspension mounting, during the course of lowering or retracting the screen, the gravity center of the projection screen apparatus changes irregularly. Especially, when lowering the screen, the gravity center of the projection screen apparatus is inclined from the vertical, which results in friction between the projection screen casing 8 and the screen back. This friction may scrape the screen and adversely affects the planarity of the screen after a long term of use, so that the life span of the screen is shortened. For wall mounting, in the case of no retarding mechanism is provided, when retracting the screen, the screen may rapidly scroll up to the top of the projection screen apparatus due to the restoring force of the restoring springs. This causes the lower shaft 83 of the screen to come into violent collision with the end covers 80 of the projection screen casing 8, so that the wall mount hole 82 in the end cover 80 of the projection screen casing 8 tends to come out from the corresponding wall mount screw 92 and thus the projection screen apparatus may drop down and hurt person.

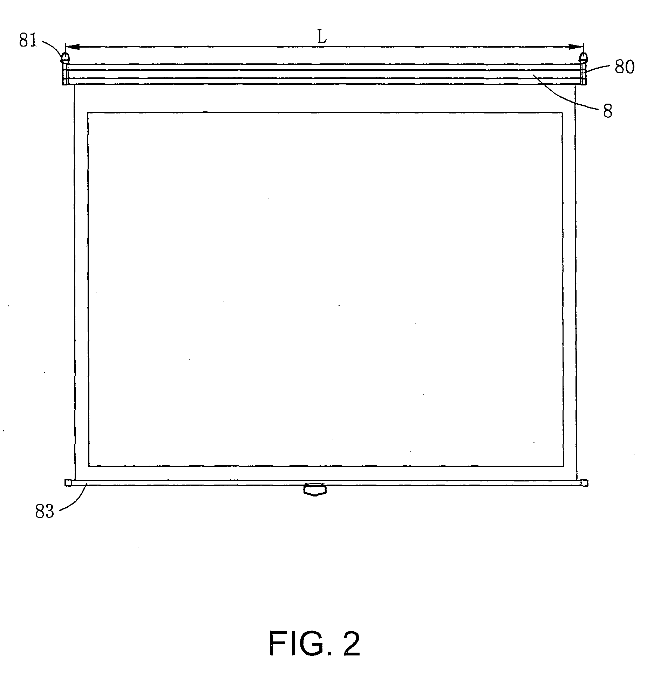

Further, as illustrated in FIG. 2, for each projection screen apparatus, the center to center spacing between the pair of opposite hangers 81 or wall mount holes 82, i.e., the transverse positioning distance "L" of the projection screen apparatus, is determined by the physical design of the projection screen apparatus and may not be adjusted at the user end. Therefore, the user may set the mount positions of the hooks 91 or the wall mount screws 92 according to the specific transverse positioning distance "L" of the projection screen apparatus, so that the mounting position of the projection screen apparatus at the user end is restricted and may not be adapted to different mounting situations. In addition, when the user is desired to replace another projection screen apparatus having a different specification such as a different width, the user may reset the mounting positions of the hooks 91 or the wall mount screws 92 according to the specific transverse positioning distance "L" of the projection screen apparatus. That is to say, the user may remount a pair of hooks 91 to the ceiling or remount a pair of screws 92 on the wall, and the remount process is rather labor-intensive and time-consuming.

Accordingly, no matter which mounting method, either suspension mounting or wall mounting, is adopted, the two conventional methods for mounting a projection screen apparatus both have disadvantages and bring inconveniencies in practical application and thus need to be improved.

### SUMMARY OF THE INVENTION

The present invention provides a slide mechanism for adjustably disposing a projection screen apparatus on a wall or a ceiling.

To achieve the above object, one embodiment of the present invention provides a slide mechanism, and the slide mechanism includes a frame, a slider, a resilient device, and an engaging device. The frame includes a receiving portion and a latch in the receiving portion. The slider is slidably disposed in the receiving portion of the frame, and includes a body portion defining a receiving groove and a pull handle connected with the body portion. The resilient device is disposed below the slider for exerting a resilient force on the slider to move the slider. The engaging device is pivotally disposed in the receiving groove of the slider, and includes an engaging end portion and an exerting end portion opposite to the engaging end portion. The engaging end portion is disposed in the receiving groove of the slider and is connected against the latch of the frame. When a force is exerted on the exerting end portion, the engaging device is correspondingly rotated, and the engaging end portion of the engaging device is disengaged from the latch of the frame.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The embodiments of the present invention may be better understood through the following description with reference to the accompanying drawings, in which:

FIG. 1 is a schematic view illustrating conventional mounting methods of a projection screen apparatus.

FIG. 2 is a schematic view illustrating the transverse positioning distance of a conventional projection screen apparatus.

FIG. 3 is a perspective, assembled view of a slide mechanism according to an embodiment of the present invention.

FIG. 4 is another perspective, assembled view of the slide mechanism according to the embodiment of the present invention taken from a different angle from that of FIG. 3.

FIG. 5 is an exploded, perspective view of the slide mechanism shown in FIG. 3.

FIG. 6 is an exploded, perspective view of the slide mechanism shown in FIG. 4.

FIG. 7 is a schematic view illustrating an initial engagement state of the slide mechanism of an embodiment of the present invention with a vertical sliding groove defined in a casing of the projection screen apparatus.

FIG. 8 is a cross sectional view of the slide mechanism of the embodiment of the present invention in the initial engagement state shown in FIG. 7.

FIG. 9 is a schematic view illustrating a complete engagement state of the slide mechanism of an embodiment of the present invention with a vertical sliding groove defmed in a casing of the projection screen apparatus.

FIG. 10 is a cross sectional view of the slide mechanism of the embodiment of the present invention in the complete engagement state shown in FIG. 9.

### DETAILED DESCRIPTION OF THE PREFERRED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "disposed" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

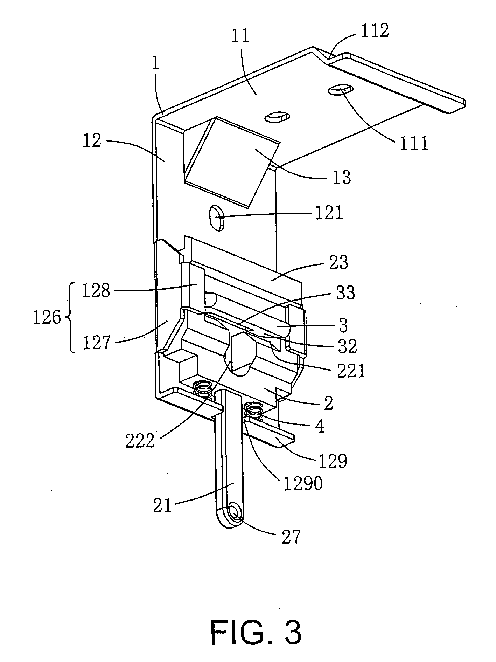

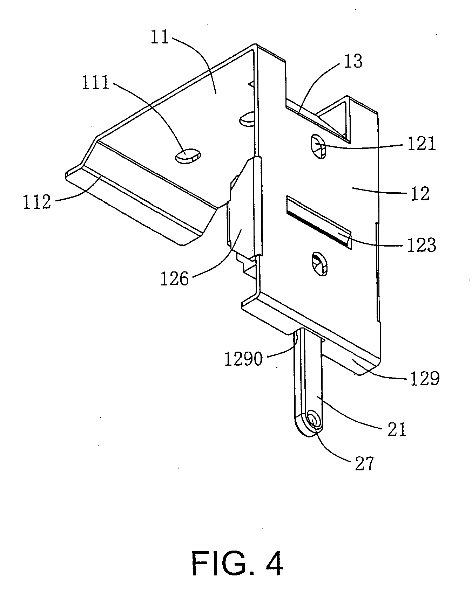

FIGS. 3 and 4 respectively show perspective, assembled views of a slide mechanism according to an embodiment of the present invention taken from different angles. The slide mechanism of the embodiment of the present invention is adapted to a projection screen apparatus having a casing. The slide mechanism includes a frame 1, a slider 2 slidably disposed in the frame 1, and an engaging device 3 pivotally disposed in the slider 2. The frame 1 is adapted to be adjustably disposed into a sliding groove defined in the casing of the projection screen apparatus, and position the projection screen apparatus on a wall or a ceiling by connection parts (detailed descriptions provided hereinafter). A resilient device 4 is further disposed between the frame 1 and the slider 2 for allowing the sliding movement of the slider 2 relative to the frame 1. In an embodiment, the resilient device 4 includes two restoring springs 4.

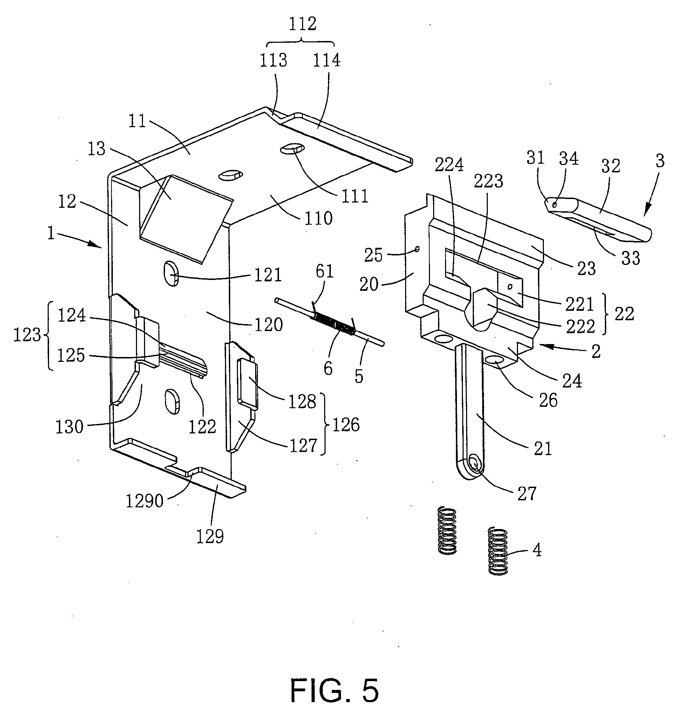

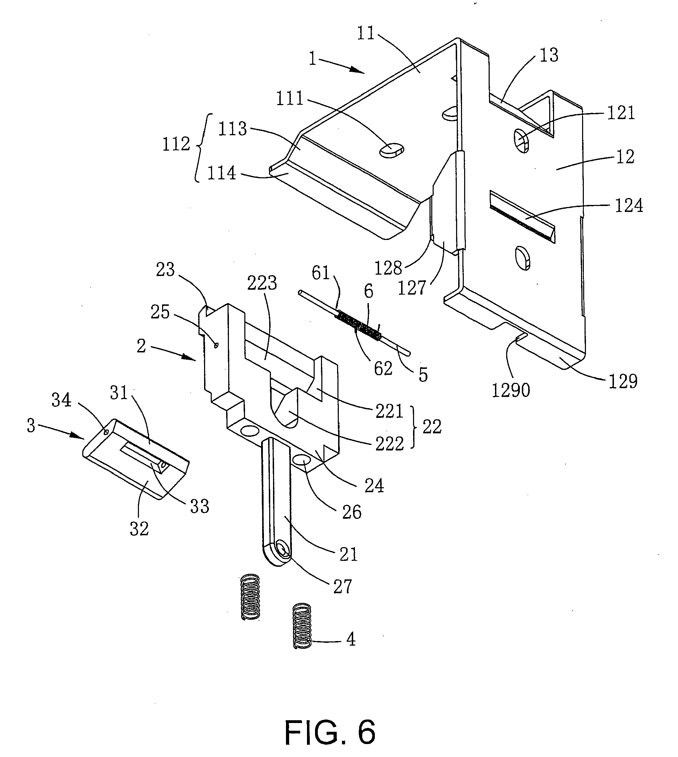

Reference is also directed to FIGS. 5 and 6, wherein FIG. 5 is an exploded, perspective view of the slide mechanism shown in FIG. 3 and FIG. 6 is an exploded, perspective view of the slide mechanism shown in FIG. 4. The two figures clearly show the detailed structures of the constituent components of a slide mechanism according to the embodiment of the present invention.

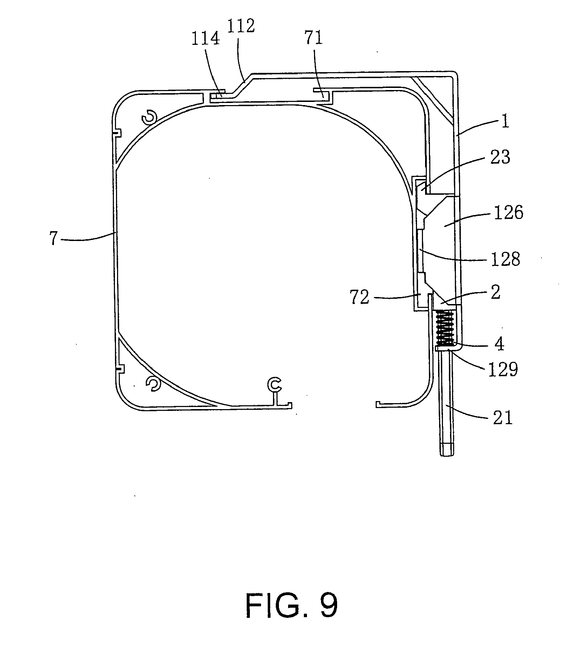

According to the embodiment of the present slide mechanism, the frame 1 is an L-shaped part integrally formed of metal, and includes a horizontal portion 11 and a vertical portion 12 forming a right angle with each other. At the junction of the horizontal portion 11 and the vertical portion 12, an inclined connection portion 13 is formed by stamping for structural reinforcement purposes. The horizontal portion 11 and the vertical portion 12 respectively define two mounting holes for fixing the projection screen apparatus on a wall or a ceiling at the user end. Specifically, the horizontal portion 11 defines two hooking holes 111 in a body section 110 thereof for suspending the projection screen apparatus from a ceiling by corresponding connection parts, and the vertical portion 12 defines two wall mount holes 121 in a body section 120 thereof for securing the projection screen apparatus to a wall by corresponding connection parts. The horizontal portion 11 further includes a tongue 112 disposed at a distal end from the vertical portion 12. The tongue 112 includes an inclined section 113 and a horizontal abutment section 114. Due to the provision of the inclined section 113, the abutment section 114 is vertically offset from the body section 110 of the horizontal portion 11 for abutment engagement with a horizontal sliding groove 71 defined in the casing of the projection screen apparatus (see FIG. 9). The body section 120 of the vertical portion 12 forms an elongated groove 122 and a latch 123 between the two wall mount holes 121 by stamping and bending. The latch 123 is bent inwardly, and includes an inclined section 124 extending from the body section 120 toward the slider 2 and a latching section 125 connected with the inclined section 124 for engaging with a corresponding portion of the engaging device 3. A pair of wings 126 is further disposed on respective opposite longitudinal edges of the body section 120 of the vertical portion 12. Each wing 126 includes a side section 127 perpendicularly extending from one longitudinal edge of the body section 120 and a bent section 128 perpendicularly and inwardly extending from the free end of the side section 127. A stop plate 129 is further disposed on a transverse edge of the body section 120 of the vertical portion 12 distant from the horizontal portion 11. The stop plate 129 perpendicularly extends from this transverse edge of the body section 120 in the same direction as the side sections 127 of the wings 126, and defines an opening 1290 in a free side edge thereof. The above-mentioned two opposite wings 126, the body portion 120, and the stop plate 129 together define a receiving portion 130 for receiving the slider 2 thereinto. The side sections 127 and the bent sections 128 of the wings 126 serve to restrict the horizontal movement of the slider 2, and the stop plate 129 serves to allow the restoring springs 4 to resiliently abut thereagainst.

According to the embodiment of the present slide mechanism, the slider 2 is made of plastic and is slidably disposed in the receiving portion 130 of the frame 1. The slider 2 includes a body portion 20 and a pull handle 21 connected with the body portion 20. The body portion 20 includes an end flange 23 at an upper end thereof, a receiving groove 22 with a T-shaped cross section in a middle section thereof and a step section 24 at a lower end thereof. The receiving groove 22 includes a first groove section 221 and a second groove section 222 extending in directions perpendicular to each other, wherein the first groove section 221 extends in a direction perpendicular to that of the pull handle 21 or parallel with that of the end flange 23 and wherein the second groove section 222 extends in a direction parallel with that of the pull handle 21 or perpendicular to that of the end flange 23. The first groove section 221 is adapted to partially dispose the engaging device 3 thereinto, and the second groove section 222 is adapted to allow extension of connection parts such as wall mount screws therethrough. The first groove section 221 has bevel surfaces 223 and 224 at upper and lower ends thereof. Two shaft holes 25 are further defined in respective opposite sides of the body portion 20 in communication with the first groove section 221 of the receiving groove 22. The step section 24 defines two accommodating holes 26 in the end surface thereof, i.e., a lower end surface of the slider 2. The two accommodating holes 26 are located at opposite sides of the pull handle 21 for respectively accommodating the two restoring springs 4 therein. Accordingly, the two restoring springs 4 are respectively disposed on opposite sides of the pull handle 21 and are located between the body portion 20 of the slider 2 and the stop plate 129 of the frame 1. The pull handle 21 is extended through the opening 1290 in the stop plate 129 for permitting a pulling operation of the user during disassembly of the slide mechanism. A through hole 27 is defined at the free end of the pull handle 21 for allowing insertion of the user's finger and thereby facilitating the pulling operation.

According to the embodiment of the present slide mechanism, the engaging device 3 includes a plate made of plastic, and includes an engaging end portion 31 for engaging with the latch 123 of the frame 1 and an exerting end portion 32 opposite to the engaging end portion 31. The slide mechanism further includes a pivot shaft 5 and at least one torsion spring 6 disposed around the pivot shaft 5. The pivot shaft 5 is partially disposed in a receiving recess 33 of the engaging device 3 for pivotally mounting the engaging device 3 in the receiving groove 22 of the slider 2. In detail, the engaging device 3 further defines two opposite shaft holes 34 in communication with the receiving recess 33. The middle portion of the pivot shaft 5 and a pair of torsion springs 6 are contained in the receiving recess 33 of the engaging device 3, and the opposite ends of the pivot shaft 5 extend through the respective two shaft holes 34 of the engaging device 3. It is understandable that although the number of torsion springs 6 is exemplarily shown to be two in the embodiment, the present invention is not so limited. A similar function may also be achieved when using only one torsion spring 6. Each torsion spring 6 has a first leg 61 for connecting against an interior surface of the receiving groove 22 of the slider 2 and a second leg 62 (see FIG. 6) for connecting against an interior surface of the receiving recess 33 of the engaging device 3. The pair of torsion springs 6 are arranged in such a manner that the two first legs 61 thereof are opposite to each other and extends in the same direction and the two second legs 62 thereof connect against each other and extend in a direction away from the two first legs 61.

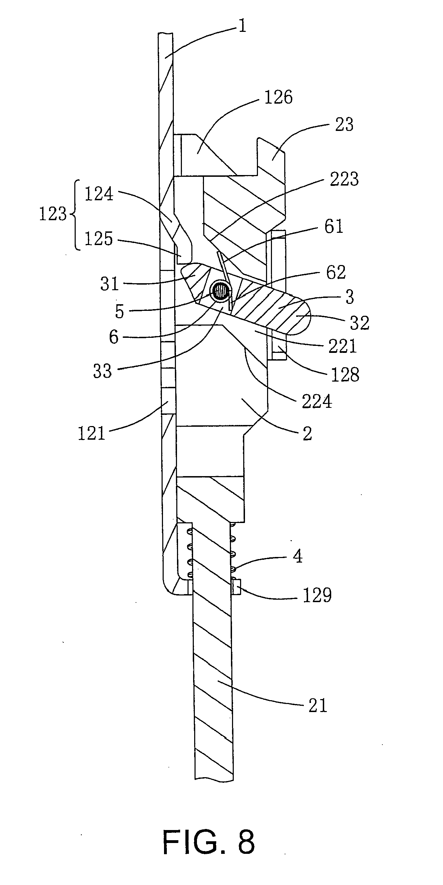

In assembly, the two torsion springs 6 are first compressively disposed in the receiving recess 33 of the engaging device 3 with the two second legs 62 thereof connected against an interior surface of the receiving recess 33 that is proximate to the exerting end portion 32 of the engaging device 3 (see FIG. 8). The engaging device 3 together with the two torsion springs 6 disposed therein is then assembled to the slider 2 with the engaging end portion 31 thereof inserted into the first groove section 221 of the receiving groove 22 of the slider 2. During this insertion process, the bevel surface 224 of the first groove section 221 provides a guiding function. When the engaging end portion 31 of the engaging device 3 is inserted into the first groove section 221 of the receiving groove 22 of the slider 2 at an appropriate position, the two first legs 61 of the two torsion springs 6 in the engaging device 3 may connect against the bevel surface 223 of the first groove section 221 of the receiving groove 22 of the slider 2 (see FIG. 8), so as to limit further insertion movement of the engaging end portion 31 into the first groove section 221. At this time, the exerting end portion 32 of the engaging device 3 is outwardly exposed relative to the slider 2, and the two shaft holes 34 of the engaging device 3 are substantially aligned with the two shaft holes 25 in the slider 2. Thus, the pivot shaft 5 then may be sequentially extended through the shaft hole 25 of the slider 2, the shaft hole 34 of the engaging device 3 and the two torsion springs 6 for being disposed on the slider 2. The two restoring springs 4 are then disposed into the two respective accommodating holes 26 at the lower end of the slider 2. The above subassembly is downwardly disposed into the receiving portion 130 of the frame 1 from an upper end of the frame 1 with the end flange 23 of the slider 2 located at the top and outwardly exposed and with the free end of the pull handle 21 of the slider 2 disposed into the opening 1290 of the frame 1. Along with the downward sliding movement of the above subassembly into the receiving portion 130 of the frame 1, the engaging end portion 31 of the engaging device 3 begins to resiliently contact with the latch 123 of the frame 1 and is guided by the inclined section 124 of the latch 123. With the release of the resilient restoring force of the latch 123 of the frame 1, the engaging end portion of the engaging device 3 connects against the latching section 125 of the latch 123 (see FIG. 8). At this time, as shown in FIG. 3, the side sections 127 of the wings 126 of the frame 1 connect against opposite side surfaces of the body portion 20 of the slider 2 and the ends of the pivot shaft 5, and the bent sections 128 of the wings 126 connect against an outer surface of the body portion 20 of the slider 2 and are located on opposite sides of the exerting end portion 32 of the engaging device 3. The upper end edges of the bent sections 128 of the wings 126 further connect against a lower side of the end flange 23 of the slider 2, so as to prevent further sliding movement of the slider 2 in the receiving portion 130 of the frame 1. The second groove section 222 of the receiving groove 22 of the slider 2 outwardly exposes a wall mount hole 121 of the frame 1 located proximate to the stop plate 129, so as to allow a connection part such as a wall mount screw to extend therethrough to mount the slide mechanism on the wall. At this time, the two restoring springs 4 are in a compressed state and thus have a resilient restoring force. One end of each restoring spring 4 is disposed in a corresponding accommodating hole 26 of the slider 2 and the other end is compressed against an inner surface of the stop plate 129 of the frame 1. The free end of the pull handle 21 of the slider 2 extends through the opening 1290 of the stop plate 129 of the frame 1 for a long distance for facilitating the pulling operation of the user disassembly during disassembly of the slide mechanism. The perspective, assembled views of the slide mechanism are shown in FIGS. 3 and 4 from different view angles. After assembly, the slide mechanism is in an initial state where the engaging end portion 32 of the engaging device 3 is connected against the latch 123 of the frame 1.

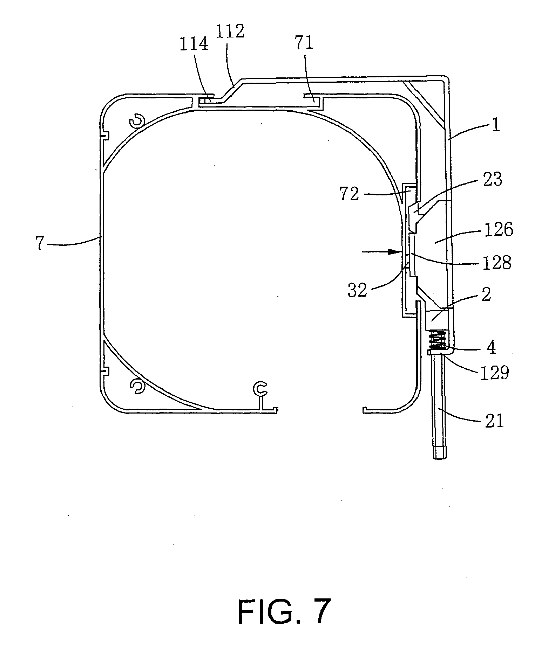

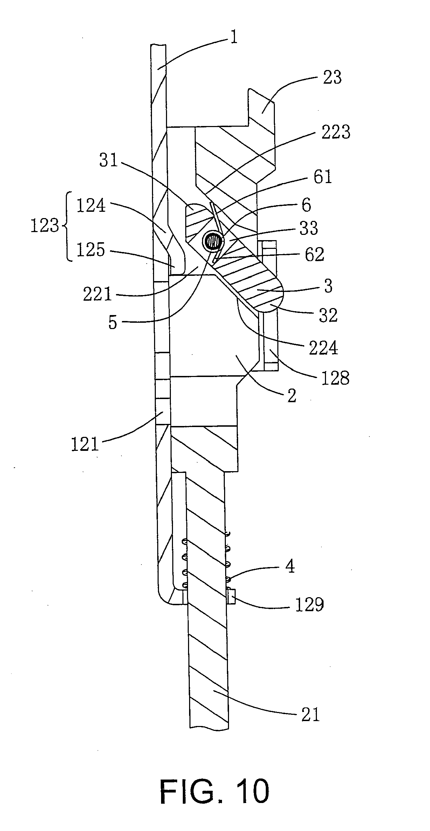

When assembling the slide mechanism to a casing of the projection screen apparatus, the slide mechanism in the initial state may be first suitably fixed to a wall at the user end by the two wall mount holes 121 defined therein. Certainly, the slide mechanism also may be disposed to a ceiling at the user end by a hooking engagement between the two hooking holes 111 defined therein and a corresponding hook suspending from the ceiling. Referring to FIG. 7, the horizontal abutment section 114 disposed at the free end of the tongue 112 of the frame 1 is then inserted into a horizontal or upper sliding groove 71 in the casing 7 of the projection screen apparatus and connects against interior surfaces of the horizontal sliding groove 71. At this time, the weight of the projection screen apparatus may bring the right side of the casing 7 into contact with the exerting end portion 32 of the engaging device 3 of the slide mechanism. Accordingly, the exerting end portion 32 of the engaging device 3 moves rightwards by action of a pushing force exerted by the casing 7 in a direction indicated by an arrow in FIG. 7. Further, as shown in FIGS. 8 and 10, due to the action of the torsion springs 6 disposed around the pivot shaft 5, the engaging device 3 pivotally disposed on the slider 2 via the pivot shaft 5 correspondingly rotates a certain angle relative to the slider 2, and the engaging end portion 31 of the engaging device 3 is disengaged from the latch 123 of the frame 1. Consequently, the two restoring springs 4 originally resiliently compressed between the slider 2 and the stop plate 129 of the frame 1 by action of the latching engagement between the latch 123 of the frame 1 and the engaging end portion 31 of the engaging device 3, are now restored to the natural lengths. As a result, as shown in FIG. 9, the slider 2 is urged by the resilient restoring force of the two restoring springs 4 to move upwardly into a vertical or right sliding groove 72 defined in the casing 7 of the projection screen apparatus. The end flange 23 of the slider 2 is interferentially disposed into a top portion of the vertical sliding groove 72 of the casing 7, the exerting end portion 32 of the engaging device 3 retracts inwardly to cause outer surfaces of the bent sections 128 of the wings 126 of the frame 1 to connect against a bottom surface of the vertical sliding groove 72 of the casing 7, and an outer surface of the step section 24 of the slider 2 connects against a right side surface of the casing 7. Thus, the casing 7 of the projection screen apparatus is now retentively assembled with the slide mechanism. In this state, the casing 7 of the projection screen apparatus may be slid along the slide mechanism within a certain distance in the length direction of the casing 7 parallel to the extending direction of the first groove section 221 of the receiving groove 22 of the slider 2, which facilitates the position adjustment or position change of the projection screen apparatus by the user.

It is clear from the above description that the operation of assembling the present slide mechanism to the casing 7 of the projection screen apparatus is quite simple and convenient. Further, by allowing the assembled casing 7 of the projection screen apparatus to be slidable along the slide mechanism within a certain distance in the length direction of casing 7, the position adjustment or position change of the projection screen apparatus by the user is also significantly facilitated. It is understandable that, in assembly, the slide mechanism also may be first assembled to the casing 7 of the projection screen apparatus, and the slide mechanism together with the projection screen apparatus may be disposed to a wall or a ceiling at the user end by engagement between the wall mount holes 121 or hooking holes 111 defined therein and corresponding connection parts such as wall mount screws or ceiling mount hooks.

When disassembling the slide mechanism from the projection screen apparatus, the pull handle 21 of the slider 2 is pulled down, such that the two restoring springs 4 are resiliently compressed between the slider 2 and the stop plate 129 of the frame 1, the end flange 23 of the slider 2 is displaced from the vertical sliding groove 72 of the casing 7 and the engaging end portion 31 of the engaging device 3 is moved downwardly to get across the latch 123 of the frame 1. At this time, by outwardly moving the casing 7 of the projection screen apparatus in a left direction, the horizontal abutment section 114 of the tongue 112 of the frame 1 may be disengaged from the horizontal sliding groove 71 of the casing 7, and consequently the casing 7 may be disengaged from the slide mechanism. Upon release of the pull handle 21 of the slider 2, the engaging end portion 31 of the engaging device 3 is moved upwardly to relatch with the latch 123 of the frame 1 by the action of the restoring springs 4 and the torsion springs 6. Thus, the slide mechanism returns to its initial state as shown in FIG. 8.

The slide mechanism may be disposed at a middle position or at opposite ends of the casing of the projection screen apparatus in the length direction of the casing. In comparison with the prior art, the specific latching structure of the slide mechanism may ensure reliable mounting of the projection screen apparatus on a wall or a ceiling at the user end. Accordingly, when the slide mechanism is suspension disposed on the ceiling, during the course of lowering or retracting the screen of the projection screen apparatus, the projection screen apparatus would not irregularly change its gravity center and be inclined from the vertical. Therefore, friction between the casing and the screen back, which may scrape the screen, may be avoided and thus the life span of the screen is elongated. For the alternative wall mount method, since the slide mechanism is retentively disposed on the casing, at a middle position in the length direction of the casing, even in the case of no retarding mechanism is provided, the rapid scrolling of the screen to the top of the projection screen apparatus during retraction which causes a lower shaft of the screen to come into violent collision with end covers of the casing also would not cause the wall mount hole in the end cover of the casing to come out from the corresponding wall mount screw, and thus drop of the projection screen apparatus which hurts person may be prevented. Further, as the slide mechanism is slidable along the length direction of the casing of the projection screen apparatus after assembly, the user may correspondingly adjust the position of the slide mechanism relative to the casing according to different mounting situations. Therefore, the slide mechanism is adaptable to different mounting situations, and the mounting position of the projection screen apparatus is not restricted by the specific transverse positioning distance "L" of the projection screen apparatus. In addition, when the user is desired to replace another projection screen apparatus having a different specification such as a different width, the user needs to detach the original projection screen apparatus from the slide mechanism and assemble the new projection screen apparatus to the slide mechanism at a proper position. Accordingly, tedious resetting of the mounting positions of the ceiling mount hooks or the wall mount screws as in the prior art may be avoided.

Accordingly; as described above, in comparison with the prior art, the slide mechanism constructed according to the embodiment of the present invention has a simple structure, facilitates convenient assembly and disassembly, ensures reliable positioning of a projection screen apparatus, and also may be adapted to different mounting situations at the user end.

It is to be understood, however, that even though numerous characteristics and advantages of the embodiment of the present invention have been set forth in the foregoing description, together with details of the structure and function of the embodiment of the invention, the disclosure is illustrative only, and changes may be made in detail, especially in matters of shape, size, and arrangement of parts within the principles of the embodiment of the invention to the full extent indicated by the broad general meaning of the terms in which the appended claims are expressed. Such changes include but not limited to the specific structural designs of the frame and the engaging device, and the relative arrangement of the engaging device and the torsion springs.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A slide mechanism adapted to a projection screen apparatus having a casing, the slide mechanism comprising:
a frame slidably disposed on the casing, the frame comprising a receiving portion and a latch disposed in the receiving portion;
a slider slidably disposed in the receiving portion of the frame, the slider comprising a body portion defining a receiving groove and a pull handle connected with the body portion;
a resilient device disposed below the slider for exerting a resilient force on the slider to move the slider; and
an engaging device pivotally disposed in the receiving groove of the slider, the engaging device comprising an engaging end portion and an exerting end portion opposite to the engaging end portion, the engaging end portion being disposed in the receiving groove of the slider and being connected against the latch of the frame;
wherein, when a force is exerted on the exerting end portion, the engaging device is correspondingly rotated and the engaging end portion is disengaged from the latch of the frame.

2. The slide mechanism as claimed in Claim **1**, further comprising a pivot shaft and at least one torsion spring disposed around the pivot shaft, wherein the engaging device further defines a receiving recess, the pivot shaft being disposed in the receiving recess of the engaging device for pivotally disposing the engaging device in the receiving groove of the slider, the torsion spring comprising a first leg and a second leg at respective opposite ends of the torsion spring, the first leg being connected against an interior surface of the receiving groove of the slider and the second leg being connected against an interior surface of the receiving recess of the engaging device.

3. The slide mechanism as claimed in Claim **2**, wherein the at least one torsion spring comprises two torsion springs, the two first legs of the two torsion springs being opposite to each other and extending in a first direction, the two second legs of the two torsion springs connecting against each other and extending in a second direction opposite to the first direction.

4. The slide mechanism as claimed in Claim **1,** wherein the latch of the frame comprises an inclined section and a latching section, the inclined section extending from the receiving portion of the frame toward the slider, the latching section being connected with the inclined section and being connected against the engaging end portion of the engaging device.

5. The slide mechanism as claimed in Claim **1,** wherein the frame comprises a horizontal portion and a vertical portion perpendicular to the horizontal portion, and the receiving portion of the frame is disposed on the vertical portion.

6. The slide mechanism as claimed in Claim **5**, wherein the horizontal portion of the frame comprises a tongue disposed at a distal end from the vertical portion, the tongue being adapted to engage with the casing of the projection screen apparatus.

7. The slide mechanism as claimed in Claim **5,** wherein the frame further comprises a connection portion disposed at the junction of the horizontal portion and the vertical portion.

8. The slide mechanism as claimed in Claim **5,** wherein each of two side edges of the vertical portion of the frame comprises a wing, the wing comprising a side section perpendicularly extending from the corresponding side edge of the vertical portion and a bent section perpendicularly and inwardly extending from the side section.

9. The slide mechanism as claimed in Claim **8,** wherein the vertical portion of the frame comprises a stop plate disposed at a distal end from the horizontal portion, the stop plate and the two wings defining the receiving portion of the frame.

10. The slide mechanism as claimed in Claim **9,** wherein the resilient device comprises two restoring springs, the two restoring springs being respectively disposed on opposite sides of the pull handle of the slider and being located between a body portion of the slider and the stop plate of the frame.

11. The slide mechanism as claimed in Claim **10,** wherein the stop plate of the frame defines an opening, and the pull handle is through the opening of the stop plate.

12. The slide mechanism as claimed in Claim **1**, wherein the receiving groove of the slider comprises a first groove section and a second groove section extending in a direction perpendicular to the first groove section, the first groove section being adapted to dispose the engaging end portion of the engaging device in the first groove section.
